# EUROPÄISCHE PATENTSCHRIFT

(11) **EP 3 615 459 B1**
(45) Veröffentlichungstag und Bekanntmachung des Hinweises auf die Patenterteilung: **29.11.2023**
(21) Anmeldenummer: 18719478.2
(22) Anmeldetag: 11.04.2018
(51) Int. Cl.: B65G 47/244, B65G 54/02

(54) **VORRICHTUNG UND VERFAHREN ZUM TRANSPORT VON PRODUKTEN INSBESONDERE FÜR VERPACKUNGSMASCHINEN**
APPARATUS AND METHOD FOR TRANSPORTING PRODUCTS, IN PARTICULAR FOR PACKAGING MACHINES
DISPOSITIF ET PROCÉDÉ POUR LE TRANSPORT DE PRODUITS, EN PARTICULIER POUR DES MACHINES D'EMBALLAGE

(30) Priorität: 26.04.2017 DE 102017206970
(43) Veröffentlichungstag der Anmeldung: 04.03.2020
(73) Patentinhaber: Syntegon Packaging Systems AG, 8222 Beringen (CH)
(72) Erfinder: MUELLER, Patrick, 8203 Schaffhausen (CH); KUETTEL, Philipp, 8180 Bülach (CH); FRANK, Alexander, 8207 Schaffhausen (CH)
(74) Vertreter: Daub, Thomas
(86) Internationale Anmeldenummer: PCT/EP2018/059221
(87) Internationale Veröffentlichungsnummer: WO 2018/197208

(56) Entgegenhaltungen:
- EP-A1- 1 123 886
- WO-A1-2015/036197
- WO-A1-2016/012157
- WO-A1-2016/200753
- DE-A1- 2 520 153
- DE-A1-102013 106 742
- DE-B3-102015 103 833
- US-A- 5 096 043

## Beschreibung

Die Erfindung geht aus von einer Vorrichtung und einem Verfahren zum Transport von Produkten insbesondere für Verpackungsmaschinen nach der Gattung der unabhängigen Ansprüche.

### Stand der Technik

Aus der EP 1123886 B1 ist eine Vorrichtung zum Transportieren von Produkten zwischen mindestens zwei Stationen bekannt. Auf einer als geschlossenen Schleife ausgebildeten Führung sind mehrere Förderelemente zur Aufnahme der Produkte beweglich geführt angeordnet. Jedes Förderelement umfasst einen auf der Führung verschiebbar geführten Wagen und ein auf dem Wagen beweglich gelagertes Transportelement für die Produkte, wobei die Bewegungen des Transportelements relativ zum Wagen durch Steuermittel gesteuert sind und das Transportelement um eine quer zur Transportrichtung des Wagens verlaufende Achse schwenkbar und/oder quer zur Transportrichtung auf dem Wagen verschiebbar ist. Es besteht die Gefahr einer Kollision des Produkthalters mit einer nachfolgenden Becherkette. Zudem ist mit einem erhöhten Aufwand zur Feineinstellung zu rechnen, dass eine Übergabe des Produkts reibungslos abläuft. Die Ausbringungsleistung gerade bei kurzen Produkten ist aufgrund der Geometrie der Förderelemente begrenzt.

Aus der EP 1948542 B1 ist bereits eine gattungsgemäße Vorrichtung bekannt. Bei diesem Vakuumrad werden Produkthalter-Arme mit einer festen Teilung auf einer kreisrunden Bahn zentral angetrieben. Damit können Produkte im beliebigen Winkel gegriffen, gedreht und abgelegt werden. Für den Bereich, in dem das Produkt gehalten wird, ist jeder Halter über einen zentralen Unterdruckkanal mit einem Ventil mechanisch geschaltet mit Unterdruck versorgt. Für eine gewählte Konfiguration stehen die Produkthaltearme in einer festen Teilung zueinander. Zur Entnahme und Positionierung der Produkte ist eine mechanische Hubkurve vorgesehen, die in einem sehr kurzen Positionsbereich den Produkthaltearm betätigt. Dies begrenzt die maximale Umfangsgeschwindigkeit der Vorrichtung. Die Produkte werden je nach bestimmten Produktabmessung zudem mit einer hohen Differenzgeschwindigkeit an nachfolgende Produktgruppierungen abgegeben, so dass unter Umständen Produkte hohen Kräften aussetzt sind.

Des Weiteren ist aus DE 10 2013 106 742 A1 bereits eine Vorrichtung zum Transport von Produkten bekannt, die zumindest eine Produktzuführung, über die Produkte hintereinander zuführbar sind, zumindest eine Übergabeeinrichtung mit einer Vielzahl von voneinander unabhängig bewegbaren Läufern, wobei zumindest ein Läufer zumindest einen Produkthalter aufweist zur Entnahme zumindest eines von der Produktzuführung zugeführten Produkts, und zumindest eine Produktabführung umfasst, wobei zumindest ein Zwischentransport vorgesehen ist zur Aufnahme des von dem Produkthalter entnommenen Produkts, wobei der Zwischentransport vor der Produktabführung angeordnet ist zur Abgabe des Produkts an die Produktabführung, wobei der Zwischentransport unabhängig von der Produktabführung bewegbar ausgebildet ist und wobei der Zwischentransport zumindest ein Transportband umfasst, wobei der Zwischentransport in einen Erfassungsbereich der Produktabführung hineinragt zur Übergabe des Produkts an die Produktabführung. Die DE 10 2013 106742 A1 offenbart demnach eine Vorrichtung zum Transport von Produkten nach dem Oberbegriff des Anspruchs 1 und ein Verfahren zum Transport von Produkten nach dem Oberbegriff des Anspruchs 10.

Der Erfindung liegt die Aufgabe zugrunde, die gattungsgemäße Vorrichtung weiter zu verbessern. Diese Aufgabe wird gelöst durch eine Vorrichtung zum Transport von Produkten nach Anspruch 1 und ein Verfahren zum Transport von Produkten nach Anspruch 10.

### Vorteile der Erfindung

Die erfindungsgemäße Vorrichtung und das erfindungsgemäße Verfahren mit den Merkmalen der unabhängigen Ansprüche haben demgegenüber den Vorteil, dass Produkte mit sehr unterschiedlichen Produktgrößen und/oder mit hoher Geschwindigkeit transportiert und ausgerichtet werden können. Gerade durch das Vorsehen eines Zwischentransports können verschiedene Transportschritte (Produkte drehen, abgeben, Produktaufnahme, Weitertransport) voneinander entkoppelt werden. Die erfindungsgemäße Vorrichtung und das erfindungsgemäße Verfahren eignen sich gleichermaßen für beliebige Produktgeometrien, sei es für runde, ovale wie eckige Produkte, wie auch für kurze oder lange Produkte. Die Produkte könnten gleichermaßen mit der schmalen Seite nach vorne oder aber auch mit der langen Seite in Transportrichtung vorauseilend zugeführt werden. Für unterschiedliche Produktgeometrien steigt die Robustheit des Systems bezogen auf Produkttoleranzen. Gerade durch eine individuelle Steuerung des Zwischentransports lässt sich eine genaue Positionierung einfach erreichen. Der wesentliche Vorteil liegt in der Entkopplung der mechanischen bzw. geometrischen Abhängigkeiten zwischen dem Transportsystem mit unabhängig bewegbaren Läufern (entsprechende Aufnahmemechanik der Läufer wie beispielsweise Schiebekopf, Steuerung und Kurvenbahn) und der Produktgruppierung resp. Produktabführung (geometrische Ausführung der Taschen, entsprechende Steuerung). Durch das Vorsehen eines Zwischentransports können Kollisionen zwischen den Haltemitteln am Läufer und dem Produkt bzw. den Mitnehmern des Produkttransports vermieden werden. Außerdem kann der Zwischentransport die Produkte in unterschiedlichen Arten zuführen, sei es flachliegend oder auf einer schmalen Seitenkante aufgestellt. Hierzu muss lediglich der Zwischentransport etwas angepasst werden. Beispielsweise werden hierzu vorzugsweise die Transportbänder etwas geneigt, sodass die Produkte im Radius einer Produktabführung den Mitnehmern übergeben werden. Dadurch können die Produkte auf Kante stehend weiter transportiert werden. Die erfindungsgemäße Vorrichtung erleichtert außerdem eine Inbetriebnahme des Systems, da genaue mechanische Einstellungen reduziert werden können. Aufgrund der einfachen Einstellung des Systems wird eine Zeitersparnis erreicht. Der Zwischentransport ist besonders zweckmäßig unabhängig von der Produktabführung bewegbar ausgebildet. Gleichwohl sind die Geschwindigkeiten aufeinander synchronisiert. Damit lässt sich eine räumlich platzsparende Anordnung realisieren.

In einer zweckmäßigen Weiterbildung umfasst der Zwischentransport mehrere nebeneinander angeordnete Transportbänder. Gerade bei verschiedenen Ausführungen des Zwischenbands (unterschiedliche Länge, Krümmungsradius des Bandes, Abstand der Bänder zueinander, Anzahl und Breite der Bänder) können unterschiedliche Produktformate und Packstile realisiert werden. So könnte das Band beispielsweise als kleines Zwischenband ausgebildet sein, auf dem das Produkt ungeführt ohne Mitnehmer angeordnet ist. In einer alternativen Variante könnte ein großes Zwischenband für Produkte, die auf Kante der Produktabführung übergeben werden sollen, vorgesehen werden, an diesem Band könnten noch Noppen oder Ähnliches das Produkt stützen. Mit einem zusätzlichen Band und Mitnehmern kann eine bessere Prozesskontrolle erreicht werden.

Erfindungsgemäß ragt der Zwischentransport in den Erfassungsbereich der Produktabführung hinein zur Übergabe des Produkts an die Produktabführung. Besonders bevorzugt weist die Produktabführung zumindest einen Mitnehmer zur Aufnahme des Produkts auf. Damit kann eine besonders präzise und störungsfreie Übergabe des Produkts erfolgen.

In einer zweckmäßigen Weiterbildung ist zumindest ein Mitnehmer zwischen zwei Transportbändern des Zwischentransports bewegbar angeordnet. Damit kann eine besonders platzsparende und zuverlässige Übergabe erfolgen, da der Mitnehmer in unmittelbarer Nähe zu den Transportbändern das Produkt hintergreift.

Erfindungsgemäß ist zwischen der Produktzuführung und dem Zwischentransport zumindest ein Rutschblech angeordnet, auf dem das von dem Produkthalter gehaltene Produkt bewegt und/oder gedreht wird. Erfindungsgemäß weist das Rutschblech zumindest eine Ausnehmung auf, in der das Transportband zumindest teilweise angeordnet ist. Damit lässt sich eine besonders schonende und sichere Übergabe des Produkts auf den Zwischentransport realisieren. Gerade bei einer Übergabe der Produkte an die Produktabführung auf Kante wird der Bandabstand durch das Rutschblech definiert. Durch das Rutschblech als Formatteil können die Abstände der einzelnen Bänder eingestellt werden.

In einer zweckmäßigen Weiterbildung ist der Produkthalter mit dem Läufer drehbar verbunden. Damit lassen sich gewünschte neue Gruppierungen der zugeführten Produkte insbesondere quer oder längs zur Transportrichtung realisieren.

In einer zweckmäßigen Weiterbildung ist zumindest eine Antriebsrolle vorgesehen, die mit dem Transportband, vorzugsweise mit mehreren Transportbändern, zusammenwirkt. Damit lässt sich ein synchroner Antrieb mehrerer Bänder erreichen.

Besonders bevorzugt sind an einem Läufer zumindest zwei Produkthalter angeordnet zur Entnahme von zumindest zwei Produkten. Zum einen kann die Ausbringungsleistung erhöht werden. Zudem kann bei kleinen Produkten die Mindestteilung (Abstand benachbarter Läufer) umgangen werden. Zudem kann die Ladeleistung an nachfolgenden Aggregaten gesteigert werden. Es können nun zwei Produkte hintereinander aufgenommen und nach Drehung nebeneinander in Taschen der Produktgruppierung bzw. Produktabführung abgegeben werden. Außerdem können mit nur einem einzigen zugeführten Produktstrom zwei abführende Produktströme erzeugt werden. Gleichermaßen ist es möglich, aus zumindest zwei zugeführten Produktströmen nur einen einzigen abgeführten Produktstrom zu erzeugen. Die Flexibilität der Vorrichtung wird dadurch erhöht. Außerdem können die Produkte über die gesamte Breite vom Zwischentransport getragen und über die gesamte Breite vom Mitnehmer geschoben bzw. übernommen werden. Damit erfolgt eine sichere Auflage der Produkte ohne Verdrehen beim Schieben. Dies trägt zur Prozesssicherheit bei.

Weitere zweckmäßige Weiterbildungen ergeben sich aus weiteren abhängigen Ansprüchen und aus der Beschreibung.

### Zeichnung

Ausführungsbeispiele der erfindungsgemäßen Vorrichtung und des erfindungsgemäßen Verfahrens sind in der Zeichnung dargestellt und werden nachfolgend näher beschrieben.

Es zeigen:
Die Figur 1 eine perspektivische Ansicht eines ersten erfindungsgemäßen Ausführungsbeispiels einer Vorrichtung zum Transport von Produkten,
die Figur 2 ein vergrößerter Ausschnitt aus der Figur 1,
die Figur 3 eine perspektivische Ansicht eines weiteren erfindungsgemäßen Ausführungsbeispiels einer Vorrichtung zum Transport von Produkten sowie,
die Figur 4 eine perspektivische Ansicht eines Ausführungsbeispiels mehrerer Produkthalter an einem Läufer.

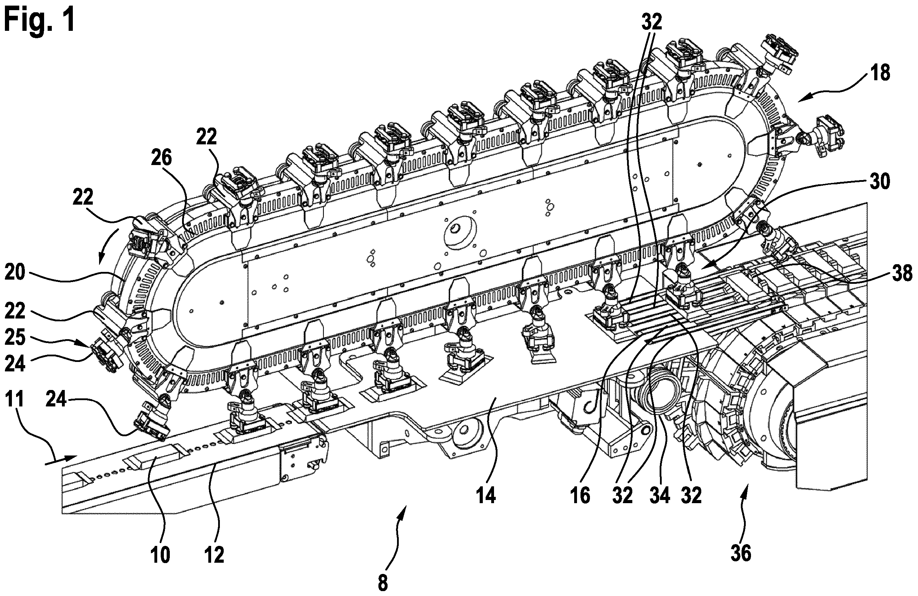

Im Ausführungsbeispiel einer Vorrichtung 8 zum Transport von Produkten 10 gemäß Figur 1 werden Produkte 10 über eine Produktzuführung 12 in Transportrichtung 11 dem weiteren Verarbeitungsprozess zugeführt. Bei den Produkten 10 kann es sich um bereits verpackte oder unverpackte Produkte 10 wie beispielsweise Lebensmittel, Pharmazeutika, Healthcare-Produkte oder ähnliches handeln. Die Produkte 10 gelangen nacheinander mit Hilfe einer beispielsweise als Transportband ausgeführten Produktzuführung 12 in den Erfassungsbereich einer Übergabeeinrichtung 18.

Die Übergabeeinrichtung 18 umfasst eine Führung 20, welche in Form eines geschlossenen Kreises bzw. einer umlaufenden Führung ausgebildet ist. An dieser Führung 20 sind eine Vielzahl von Läufern 22 angeordnet, welche unabhängig voneinander beschleunigt und abgebremst werden können. Die Übergabeeinrichtung 18 ist oberhalb der Produktzuführung 12 angeordnet und überdeckt diese teilweise. Die Läufer 22 sind Teil eines Linearantriebs 26, der über ein magnetisches Wanderfeld die Läufer 22 individuell bewegt und positioniert. Hierzu sind beispielsweise in den Läufern 22 jeweils Permanentmagnete angeordnet, die mit bestimmten Spulenabschnitten, die in der Führung 20 angeordnet sind, zusammenwirken. Alternativ kann die Führung 20 auch unabhängig vom Stator angeordnet sein. Hierzu sind entsprechende, nicht gezeigte Steuermittel und/oder Positionssensoren vorgesehen, die der exakten Positionierung der Läufer 22 bzw. der Vorgabe des gewünschten Geschwindigkeitsprofils der Läufer 22 dienen.

An dem Läufer 22 befindet sich zumindest ein Produkthalter 24. Der Produkthalter 24 beinhaltet beispielsweise mehrere Haltemittel 25, über die beispielsweise die Oberseite der zugeführten Produkte 10 gegriffen werden kann. Als Haltemittel 25 können beispielsweise mittels Unterdruck aktivierte Saugmittel, bewegliche Greifer, Produktschuhe (die das Produkt 10 zum Weitertransport umschließend aufnehmen können) oder ähnliches vorgesehen sein. Zur Aufnahme der zugeführten Produkte 10 wird die Geschwindigkeit der Läufer 22 mit der Geschwindigkeit der Produktzuführung 12 synchronisiert. Der das Produkt 10 entnehmende Läufer 22 nähert sich dem Produkt 10 mit derselben Geschwindigkeit, mit der das Produkt 10 durch die Produktzuführung 12 in den Erfassungsbereich der Übergabeeinrichtung 18 gelangt. Der Läufer 22 wird oberhalb des zu entnehmenden Produkts 10 positioniert. Das Haltemittel 25 des Produkthalters 24 kommt zur Entnahme in Kontakt mit dem Produkt 10. Der Läufer 22 bewegt das vom Produkthalter 24 gegriffene Produkt 10 entlang eines Rutschblechs 14. Das Rutschblech 14 schließt sich unmittelbar an das Ende der Produktzuführung 12 an. Entlang der Transportrichtung 11 weitet sich das Rutschblech 14, um ein um 90° gedrehtes Produkt 10 aufnehmen zu können. Anschließend geht das Rutschblech 14 in den Zwischentransport 30 über bzw. der Zwischentransport 30 schließt sich an das Rutschblech 14 an. Hierzu können Ausnehmungen 16 am Ende des Rutschblechs 14 vorgesehen sein, in denen die Anfangsbereiche von Transportbändern 32 des Zwischentransports 30 angeordnet sind.

Der Produkthalter 24 ist relativ bewegbar zu dem Läufer 22 ausgebildet. Im Ausführungsbeispiel gemäß Figur 1 dreht sich der Produkthalter 24, so dass das zunächst in Längsrichtung ausgerichtete Produkt 10 quer zur Transportrichtung 14 orientiert wird. Alternativ wäre es aber auch denkbar, dass quer ausgerichtete Produkte 10 gegriffen und in Längsrichtung orientiert werden.

Die in den Bereich der Transportbänder 32 übergeschobenen oder abgelegten Produkte 10 werden von den Transportbändern 32 in Transportrichtung 11 weiterbewegt und einer Produktabführung 36 zugeführt. Die Transportbänder 32 werden beispielsweise über eine Antriebsrolle 34 geführt. Die Antriebsrolle 34 bewegt die Transportbänder 32 synchron. Über Umlenkrollen werden die Transportbänder 32 in die jeweilige Ausnehmung 16 des Rutschblechs 14 geführt. Die Transportbänder 32 verlaufen in den Ausnehmungen 16 parallel zur Oberfläche des Rutschblechs 14. Die Transportbänder 32 werden nach dem Ende des Rutschblechs 14 noch weiter in Richtung der Produktabführung 36 geführt und zwar so lange, dass das von den Transportbändern 32 bewegte Produkt 10 von dem Mitnehmer 38 der Produktabführung 36 übernommen werden kann. Am Ende des Zwischentransports 30 werden die Transportbänder 32 wieder über entsprechende Rollen auf die Antriebsrolle 34 zurück umgelenkt.

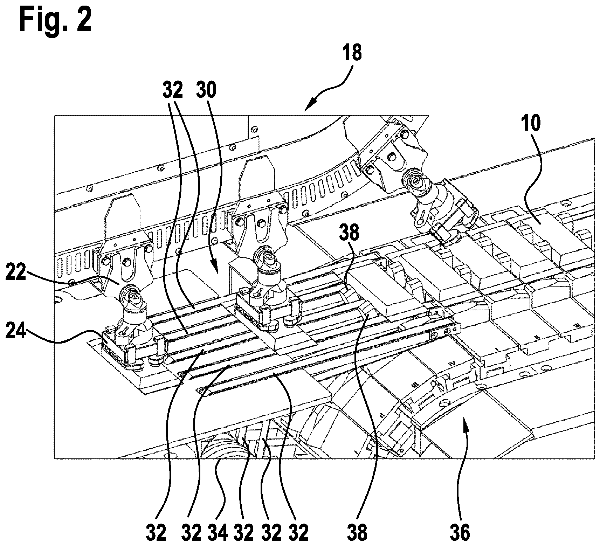

Bei dem Ausführungsbeispiel gemäß Figur 1 bzw. der vergrößerten Ansicht in Figur 2 sind beispielhaft fünf Transportbänder 32 vorgesehen, die parallel zueinander orientiert sind. Der Abstand zweier benachbarter Transportbänder 32 ist so ausgebildet, dass am Ende des Zwischentransports 30 der Mitnehmer 38 bzw. mehrere Mitnehmer 38 zwischen benachbarten Transportbändern 32 von unten nach oben eintauchen kann, um das Produkt 10 an dessen Längsseite zu hintergreifen. Die Geschwindigkeit der Produktabführung 36 wird auf die Geschwindigkeit der Produktzuführung 12 abgestimmt. Somit können auf dem Zwischentransport 30 befindliche Produkte 10 kurzzeitig beschleunigt oder abgebremst werden, um das Produkt 10 positionsgenau dem aufnehmenden Mitnehmer 38 bzw. den aufnehmenden Mitnehmern 38 zu übergeben. Im Ausführungsbeispiel werden die durch die Produktzuführung 12 mit einer hohen Geschwindigkeit zugeführten, längs orientierten Produkte 10 nach der Entnahme auf eine geringere Geschwindigkeit beim Drehen abgebremst und schon vor dem Beginn des Zwischentransports 30 auf die Zielgeschwindigkeit abgebremst. In diesem Bereich synchronisiert sich der Zwischentransports 30 auf den Läufer 22 mit dem entsprechenden Produkt 10 auf. Eine Übergabe auf den Zwischentransport 30 erfolgt somit in der Regel ohne Relativbewegung. Ändert sich die Geschwindigkeit der Produktzuführung 12, so würde dies auch in einer veränderten Geschwindigkeit des Zwischentransports 30 bzw. Produktabführung 36 resultieren. Damit läuft die Produktabführung 36 grundsätzlich der Produktzuführung 12 nach.

Der Zwischentransport 30 zeichnet sich zum einen dadurch aus, dass zum Produkttransport keine über die Ebene des Rutschblechs 14 hinausragende Mitnehmer benötigt werden, die somit nicht mit der Übergabeeinrichtung 18 kollidieren können. Ebenso kann im Falle einer Leerteilung, wenn also kein Produkt 10 unter dem Produkthalter 24 ist und die Produktabführung 36 auf das nächste Produkt 10 wartet, der Produkthalter 24 mit dem wartenden Produkt 10 in der davor befindlichen Produktaufnahme 38 nicht mehr kollidieren. Alternativ könnte die Leerteilungskompensation auch am Eingang gemacht werden, indem der Produkthalter 24 auf das nächste Produkt 10 wartet. Alternativ könnte auch ein Läufer 22 leer, also ohne Produkt 10, weiterbewegt werden. Über den Zwischentransport 30 lässt sich zudem die Feineinstellung, also das genaue Positionieren des aufgenommenen Produkts 10 in der Produktabführung 36, besonders einfach bewerkstelligen. Eine genauere mechanische Einstellung bzw. Auslegung der Übergabeeinrichtung 18 ist damit nicht mehr notwendig. Zudem lassen sich Produkttoleranzen über den Zwischentransport 30 leichter ausgleichen.

Alternativ könnten auch mehrere Produkte 10 von mehreren Läufern 22 gebracht werden und die gesamte Gruppe mit einem Mitnehmer 38 weiter transportiert werden. Hierzu könnten beispielsweise die eine Gruppe bildenden Produkte 10 hintereinander oder auch aufeinander der Produktabführung 36 zugeführt werden.

Optional könnte ein Sensor vorgesehen sein, der die Position des Produkts 10 auf dem Zwischentransport 30 erfasst und dessen Ausgangssignal für die Ansteuerung der Geschwindigkeit und/oder Position der Transportbänder 32 verwendet ist. Die Transportbänder 32 können darüber hinaus ebenfalls in Abhängigkeit von der Position der Mitnehmer 38 der Produktabführung 36 angesteuert werden. Haben die Mitnehmer 38 das Produkt 10 umgriffen, so bringt der Zwischentransport 30 das nächste Produkt 10 in den Erfassungsbereich der Produktabführung 36 bzw. der nächsten Mitnehmer 38, die zwischen den Transportbändern 32 als nächstes auftauchen.

Die Produktabführung 36 umfasst Produktaufnahmen, Taschen bzw. Mitnehmer 38, die die von dem Zwischentransport 30 zugeführten Produkte 10 an den Querseiten der Produkte 10 aufnehmen. Die Produktabführung 36 dient als Gruppiereinheit. Die Mitnehmer 38 bilden Taschen, in denen die Produkte weiterverarbeitenden Einrichtungen zugeführt werden. Die Produktabführung 36 kann beispielsweise als Zweizugeinheit ausgebildet sein, die Mitnehmer 38 können mit unterschiedlichen Zügen, die unabhängig voneinander bewegt werden können, verbunden sein. Die Mitnehmer 38 lassen sich hierbei mit unterschiedlichen Geschwindigkeiten ansteuern, sodass insbesondere die Relativposition benachbarter Mitnehmer 38 zueinander verändert werden kann.

In einem nicht gezeigten alternativen Ausführungsbeispiel könnte der Zwischentransport 30 die Produkte 10 im Radius der Produktabführung 36 den Mitnehmern 38 übergeben werden. Dadurch können die Produkte 10 auf Kante stehend weiter transportiert werden. Hierzu müssten die Transportbänder 32 des Zwischentransports 30 gegenüber der Horizontalen geneigt so ausgerichtet werden, dass die Produkte 10 an der gewünschten Stelle mit der Stirnseite voraus hin zum Mittelpunkt des Radius der Produktabführung 36 dem bereitstehenden Mitnehmer 38 zugeführt werden. Die flache Längsseite gelangt in Kontakt mit dem radial orientierten Mitnehmer 38.

Die beschriebene Vorrichtung 8 zum Transport von Produkten 10 arbeitet nun folgendermaßen. Zunächst bewegt der Läufer 22 am Ende des oberen linearen Abschnitts der Führung 20 den Produkthalter 24 in die Entnahmeposition. Dies erfolgt durch eine Drehung um 90°. Im unteren Kurvenabschnitt wird der Läufer 22 auf die Bewegung des von der Produktzuführung 12 zugeführten Produkts 10 aufsynchronisiert, so dass der Produkthalter 24 mit derselben Geschwindigkeit wie das aufzunehmende Produkt 10 bewegt wird. Nach erfolgter Aufsynchronisation wird das Haltemittel 25 des Produkthalters 24 aktiviert, sodass das Produkt 10 gegriffen wird. Im gegriffenen Zustand überführt der Läufer 22 das Produkt 10 von der Produktzuführung 12 auf das Rutschblech 14. Auf dem Rutschblechs 14 dreht der Produkthalter 24 das gegriffene Produkt 10 um 90°. Die Drehung um 90° ist spätestens dann abgeschlossen, wenn das gegriffene Produkt 10 sich im Bereich des Zwischentransports 30 befindet.

Bevorzugt passt der Läufer 22 in diesem Bereich seine Geschwindigkeit an die Geschwindigkeit des Zwischentransports 30 an. Das Produkt 10 wird zumindest gegen Ende des Zwischentransports 30 auf den zugehörigen Transportbändern 32 abgelegt. Hierzu wird das Haltemittel 25 wieder deaktiviert. Der Läufer 22 entfernt sich im Kurvenbereich der Übergabeeinrichtung 18 von dem Produkt 10, welches nun durch den Zwischentransport 30 bewegt wird. Der Zwischentransport 30 bewegt das Produkt 10 gegebenenfalls mit einer beschleunigten Bewegung bis hin zu den vorauseilenden Mitnehmern 38, die die nacheilenden Mitnehmer 38 des vorangegangenen Produkts 10 bilden. Währenddessen gelangen die nacheilenden Mitnehmer 38 von unten durch die Zwischenräume zwischen benachbarten Transportbändern 32 an die noch freie Rückseite des Produkts 10. Dieses Produkt 10 ist nun wie beispielhaft in Figur 1 dargestellt von beiden Seiten durch vorauseilenden und nacheilenden Mitnehmer 38 umschlossen. Dies ist nicht zwingend erforderlich, der vorauseilende Mitnehmer 38 kann auch einen größeren Abstand haben. Die Längsachse der ursprünglich längst zugeführten Produkte 10 ist nun quer zur Transportrichtung 11 orientiert. Die Produkte 10 sind nun unmittelbar benachbart und nur getrennt durch einen Mitnehmer 38 voneinander angeordnet. In diesem Zustand werden die Produkte 10 durch die Produktabführung 36 weiterverarbeitenden Einrichtungen zugeführt. Als weiter verarbeitende Einrichtung könnte es sich beispielsweise um einen Kartonierer handeln, der die zugeführten Produkte 10 in Faltschachteln überführt und verpackt.

Somit zeichnet sich der Betrieb der Vorrichtung 8 zum Transport von Produkten 10 durch nachfolgende Schritte aus:
- Aufsynchronisieren der Geschwindigkeit des Läufers 22 auf die Geschwindigkeit des von der Produktzuführung 12 zugeführten Produkts 10 und/oder
- Entnahme des Produkts 10 durch Aktivierung des Haltemittels 25 und/oder des Produkthalters 24 und/oder
- Drehen des Produkthalters 24, vorzugsweise um 90° und/oder
- Ablegen des Produkts 10 durch Deaktivierung des Haltemittels 25 und/oder des Produkthalters 24 auf dem Zwischentransport 30 und/oder
- Bewegen des Produkts 10 durch den Zwischentransport 30 in den Erfassungsbereich der Produktabführung 36, insbesondere in Richtung zumindest eines Mitnehmers 38, und/oder
- Bewegen des Mitnehmers 38 zu dem Produkt 10, insbesondere indem der Mitnehmer 38 zwischen zwei benachbarten Transportbändern 32 hindurch geführt wird, und/oder
- Wegbewegen des Läufers 22 von dem Produkt 10 und/oder
- Drehen des Produkthalters 24 in eine Aufnahmeposition zur Aufnahme des Produkts 10.

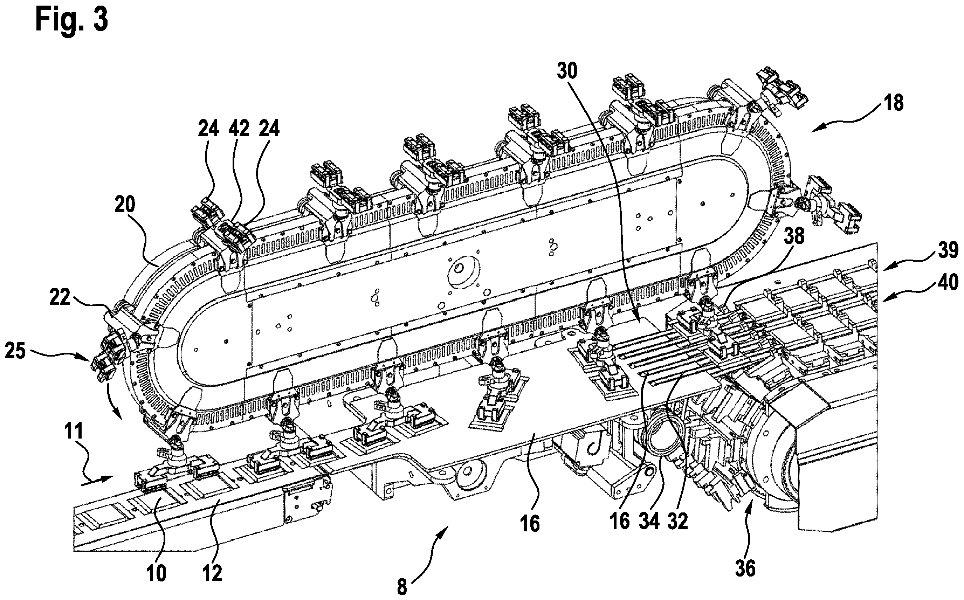

Zur weiteren Erhöhung der Ausbringungsleistung sind in dem Ausführungsbeispiel gemäß Figur 3 die Läufer 22 jeweils mit zumindest zwei Produkthaltern 24 ausgestattet. Die beiden Produkthalter 24 sind über einen Arm 42 miteinander verbunden. Der Arm 42 wiederum ist bewegbar bzw. drehbar mit dem Läufer 22 verbunden.

Außerdem wurde das Ausführungsbeispiel gemäß Figur 1 dahingehend abgewandelt, dass die Produktabführung 36 zwei parallele Produktabführungen 39, 40 umfasst. Jede der beiden Produktabführungen 39,40 weisen entsprechende Mitnehmer 38 auf, die zwischen den Transportbändern 32 angeordnet sind und die jeweils die abzuführenden Produkte 10 von unten hintergreifen und vom Zwischentransport 30 entnehmen. Die beiden Produkthalter 24 eines Arms 42 sind so weit voneinander beanstandet, dass zwei von der Produktzuführung 12 hintereinander zugeführte Produkte 10 sicher gegriffen werden. Hierzu wird der Arm 42 vor der Entnahmestelle so gedreht, dass die beiden Produkthalter 24 bezogen auf die Transportrichtung 11 hintereinander angeordnet sind. In dieser Stellung werden die Haltemittel 25 aktiviert, wenn sie sich im Erfassungsbereich beider zu entnehmender Produkte 10 befinden. Die Haltemittel 25 können auch nacheinander aktiviert werden, wenn beispielsweise der Produktabstand nicht genau dem Abstand der zwei Produkthalter 24 entspricht. Anschließend werden die entnommenen Produkte 10 entlang des Rutschblechs 14 geführt. Dabei wird der Arm 42 gedreht, bis die Produkte 10 nebeneinander, also quer zur Transportrichtung 11 ausgerichtet sind. In dem um 90° gedrehten Zustand bringt der Läufer 22 die beiden Produkte 10 in den Erfassungsbereich des Zwischentransports 30. Die durch die Ausnehmungen 16 hindurchragenden Transportbänder 32 nehmen die beiden Produkte 10 nebeneinander auf, sobald die Haltemittel 25 der Produkthalter 24 deaktiviert wurden. Der Zwischentransport 30 bringt die beiden nebeneinanderliegenden Produkte 10 in den Erfassungsbereich der Mitnehmer 38 der beiden parallel angeordneten Produktabführungen 39,40 als Bestandteil der Produktabführung 36. Wiederum tauchen die im Ausführungsbeispiel gezeigten vier Mitnehmer 38 von unten zwischen benachbarten Transportbändern 32 auf und hintergreifen die Produkte 10 an den zum Zwischentransport 30 orientierten Längsseiten. In der Zwischenzeit bewegen sich die Läufer 22 im Kurvenbereich der Übergabeeinrichtung 18 weiter, wobei der Arm 42 immer noch quer zur Transportrichtung 11 orientiert bleibt. Damit können die Läufer 22 im oberen geraden Bereich der Übergabeeinrichtung 18 gering voneinander beanstandet werden, ohne dass es zu Kollisionen kommt. Erst im sich anschließenden Kurvenbereich wird der Arm 42 wieder parallel zur Transportrichtung 11 gedreht.

Als nicht gezeigte Alternative könnte die Produktzuführung 12 beispielsweise aus zwei Transportmitteln bestehen, die parallel zueinander zumindest zwei nebeneinander angeordnete Produkte 10 zuführen. Die beiden Haltemittel 25 werden nun über diese beiden Produkte 10 angeordnet. Anschließend greifen die Haltemittel 25 die beiden Produkte 10, drehen sie und legen sie hintereinander auf dem Zwischentransport 30 ab. Die Produktabführung 36 erfolgt dann beispielsweise einreihig.

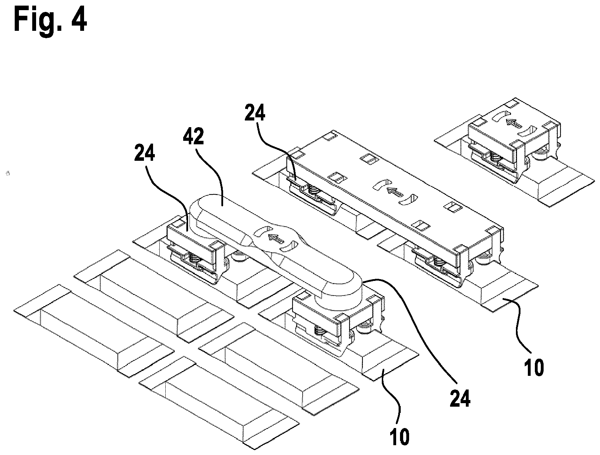

Mögliche Ausführungsbeispiele der Produkthalter 24 und zugehörige Arme 42 sind in Figur 4 dargestellt. Diese Formatteile können leicht an unterschiedliche Produktgeometrien angepasst werden. Als Haltemittel 25 könnten Sauger, die mit Unterdruck beaufschlagt werden können, Greifer, ein Produktschuh oder sonstige geeignete Vorrichtungen zum Einsatz kommen.

Das Ausführungsbeispiel gemäß den Figuren 3 und 4 zeichnet sich dadurch aus, dass doppelt so viele Produkte 10 zu den Mitnehmern 38 beispielsweise zu einem Belade-Roboter transportiert werden können. Damit können auch die nachfolgenden Aggregate wie beispielsweise ein Kartonierer mit höherer Leistung betrieben werden. Gerade bei kleinen Produkten 10 eignet sich diese Lösung, da nun nicht mehr die Baugröße des Läufers 22 und damit der minimale Abstand zweier benachbarter Läufer 22 die limitierende Größe darstellt.

Die Vorrichtung 8 gemäß dem Ausführungsbeispiel gemäß Figur 3 und 4 umfasst zumindest eine Produktzuführung 12, über die Produkte 10 hintereinander zuführbar sind, zumindest eine Übergabeeinrichtung 18 mit einer Vielzahl von voneinander unabhängig bewegbaren Läufern 22, wobei zumindest ein Läufer 22 zumindest zwei Produkthalter 24 aufweist zur Entnahme zweier von der Produktzuführung 12 zugeführten Produkte 10, zumindest eine Produktabführung 36, 39, 40 zur Abführung vorzugsweise nebeneinander angeordneter Produkte 10. Besonders bevorzugt umfasst die Vorrichtung 8 einen bewegbar und/oder drehbar mit dem Läufer 22 verbundenen Arm 42, an dem zumindest zwei Produkthalter 24 angeordnet sind.

Die Vorrichtung ist Bestandteil eines flexiblen Transportsystems für unterschiedliche Transportanwendungen, insbesondere in der Verpackungstechnik von beispielsweise Pharmazeutika oder Lebensmittel. Die Verwendung ist hierauf jedoch nicht eingeschränkt.

## Patentansprüche

1. Vorrichtung zum Transport von Produkten (10) insbesondere für Verpackungsmaschinen, umfassend zumindest eine Produktzuführung (12), über die Produkte (10) hintereinander zuführbar sind, zumindest eine Übergabeeinrichtung (18) mit einer Vielzahl von voneinander unabhängig bewegbaren Läufern (22), wobei zumindest ein Läufer (22) zumindest einen Produkthalter (24) aufweist zur Entnahme zumindest eines von der Produktzuführung (12) zugeführten Produkts (10), umfassend zumindest eine Produktabführung (36, 39, 40) und zumindest einen Zwischentransport (30) zur Aufnahme des von dem Produkthalter (24) entnommenen Produkts (10), wobei der Zwischentransport (30) vor der Produktabführung (36, 39, 40) angeordnet ist zur Abgabe des Produkts (10) an die Produktabführung (36, 39, 40), wobei der Zwischentransport (30) unabhängig von der Produktabführung (36, 39, 40) bewegbar ausgebildet ist und wobei der Zwischentransport (30) zumindest ein Transportband (32) umfasst, wobei der Zwischentransport (30) in einen Erfassungsbereich der Produktabführung (36, 39, 40) hineinragt zur Übergabe des Produkts (10) an die Produktabführung (36, 39, 40), **dadurch gekennzeichnet, dass** zwischen der Produktzuführung (12) und dem Zwischentransport (30) zumindest ein Rutschblech (14) angeordnet ist, auf dem das von dem Produkthalter (24) gehaltene Produkt (10) bewegt und/oder gedreht wird, wobei in dem Rutschblech (14) zumindest eine Ausnehmung (16) vorgesehen ist, in der das zumindest eine Transportband (32) zumindest teilweise angeordnet ist.

2. Vorrichtung nach Anspruch 1, **dadurch gekennzeichnet, dass** der Zwischentransport (30) mehrere nebeneinander angeordnete Transportbänder (32) umfasst.

3. Vorrichtung nach einem der vorhergehenden Ansprüche, **dadurch gekennzeichnet, dass** die Produktabführung (36,39, 40) zumindest einen Mitnehmer (38) zur Aufnahme des Produkts (10) aufweist und/oder dass der Zwischentransport (30) keinen Mitnehmer aufweist.

4. Vorrichtung nach Anspruch 3, **dadurch gekennzeichnet, dass** der zumindest eine Mitnehmer (38) zwischen zwei Transportbändern (32) des Zwischentransports (30) bewegbar angeordnet ist.

5. Vorrichtung nach einem der vorhergehenden Ansprüche, **dadurch gekennzeichnet, dass** der Produkthalter (24) mit dem Läufer (22) drehbar verbunden ist, insbesondere zur Drehung des zumindest einen Produkts (10) von einer Orientierung in Transportrichtung (11) in eine Orientierung quer zu der Transportrichtung (11).

6. Vorrichtung nach einem der vorhergehenden Ansprüche, **dadurch gekennzeichnet, dass** zumindest eine Antriebsrolle (34) vorgesehen ist, die mit dem Transportband (32), vorzugsweise mit mehreren Transportbändern (32) zusammenwirkt.

7. Vorrichtung nach einem der vorhergehenden Ansprüche, **dadurch gekennzeichnet, dass** an einem Läufer (22) zumindest zwei Produkthalter (24) angeordnet sind zur Entnahme von zumindest zwei Produkten (10).

8. Vorrichtung nach einem der vorhergehenden Ansprüche, **dadurch gekennzeichnet, dass** zumindest ein Arm (42) vorgesehen ist, an dem zumindest zwei Produkthalter (24) angeordnet sind, wobei der Arm (42) drehbar mit dem Läufer (22) verbunden ist.

9. Vorrichtung nach einem der vorhergehenden Ansprüche, **dadurch gekennzeichnet, dass** die Produktabführung (36) zumindest zwei nebeneinander angeordnete Produktabführungen (39,40) umfasst.

10. Verfahren zum Transport von Produkten (10) insbesondere für Verpackungsmaschinen, wobei zumindest eine Produktzuführung (12) Produkte (10) hintereinander zuführt, wobei zumindest eine Übergabeeinrichtung (18) eine Vielzahl von voneinander unabhängig bewegbaren Läufern (22) aufweist, wobei zumindest ein Läufer (22) zumindest einen Produkthalter (24) aufweist, der zumindest ein von der Produktzuführung (12) zugeführtes Produkt (10) entnimmt, wobei der Produkthalter (24) das entnommene Produkt (10) zumindest einem zumindest ein Transportband (32) umfassenden Zwischentransport (30) zuführt, wobei der Zwischentransport (30) das Produkt (10) Produktabführung (36, 39, 40) zuführt, wobei der Zwischentransport (30) unabhängig von der Produktabführung (36, 39, 40) bewegbar ausgebildet ist, wobei der Zwischentransport (30) in einen Erfassungsbereich der Produktabführung (36, 39, 40) hineinragt zur Übergabe des Produkts (10) an die Produktabführung (36, 39, 40), **dadurch gekennzeichnet, dass** das von dem Produkthalter (24) gehaltene Produkt (10) auf einem zwischen der Produktzuführung (12) und dem Zwischentransport (30) angeordneten Rutschblech (14) bewegt und/oder gedreht wird, wobei in dem Rutschblech (14) zumindest eine Ausnehmung (16) vorgesehen ist, in der das zumindest eine Transportband (32) zumindest teilweise angeordnet ist.

11. Verfahren nach Anspruch 10, **gekennzeichnet durch** nachfolgende Schritte:
- Aufsynchronisieren der Geschwindigkeit des Läufers (22) auf die Geschwindigkeit des von der Produktzuführung (12) zugeführten Produkts (10) und/oder
- Drehen des Produkthalters (24), vorzugsweise um 90° und/oder
- Bewegen des Produkts (10) durch den Zwischentransport (30) in den Erfassungsbereich der Produktabführung (36), insbesondere in Richtung zumindest eines Mitnehmers (38), und/oder
- Bewegen des Mitnehmers (38) zu dem Produkt (10), insbesondere indem der Mitnehmer (38) zwischen zwei benachbarten Transportbändern (32) des Zwischentransports (30) hindurch geführt wird.

## Claims

1. Apparatus for a transport of products (10), in particular for packaging machines, comprising
at least one product feed (12) via which the products (10) can be fed in succession,
at least one transfer device (18) having a plurality of movers (22) that are movable independently of one another,
wherein at least one of the movers (22) has at least one product holder (24) for removing at least one product (10) fed by the product feed (12), comprising at least one product discharge (36, 39, 40) and
at least one intermediary transport means (30) for receiving the product (10) removed by the product holder (24),
wherein the intermediary transport means (30) is arranged upstream of the product discharge (36, 39, 40) in order to deliver the product (10) to the product discharge (36, 39, 40),
wherein the intermediary transport means (30) is configured to be movable independently of the product discharge (36, 39, 40) and
wherein the intermediary transport means (30) comprises at least one conveyor belt (32),
wherein the intermediary transport means (30) projects into a collecting region of the product discharge (36, 39, 40) for a transfer of the product (10) to the product discharge (36, 39, 40),
**characterised in that** between the product feed (12) and the intermediary transport means (30) at least one slide plate (14) is arranged, on which the product (10) held by the product holder (24) is moved and/or rotated,
wherein at least one cutout (16), in which the at least one conveyor belt (32) is at least partially arranged, is provided in the slide plate (14).

2. Apparatus according to claim 1,
**characterised in that** the intermediary transport means (30) comprises a plurality of conveyor belts (32) arranged alongside one another.

3. Apparatus according to one of the preceding claims,
**characterised in that** the product discharge (36, 39, 40) has at least one dog (38) for receiving the product (10) and/or that the intermediary transport means (30) does not have a dog.

4. Apparatus according to claim 3,
**characterised in that** the at least one dog (38) is arranged in a movable manner between two conveyor belts (32) of the intermediary transport means (30).

5. Apparatus according to one of the preceding claims,
**characterised in that** the product holder (24) is rotatably connected to the mover (22), in particular for a rotation of the at least one product (10) from an orientation in a transport direction (11) into an orientation transversely to the transport direction (11).

6. Apparatus according to one of the preceding claims,
**characterised in that** at least one drive roller (34) is provided that cooperates with the conveyor belt (32), preferably with several conveyor belts (32).

7. Apparatus according to one of the preceding claims,
**characterised in that** at least two product holders (24) are arranged on a mover (22) in order to remove at least two products (10).

8. Apparatus according to one of the preceding claims,
**characterised in that** at least one arm (42) is provided, on which at least two product holders (24) are arranged, wherein the arm (42) is rotatably connected to the mover (22).

9. Apparatus according to one of the preceding claims,
**characterised in that** the product discharge (36) comprises at least two product discharges (39, 40) arranged alongside one another.

10. Method for a transport of products (10), in particular for packaging machines,
wherein at least one product feed (12) feeds products (10) in succession, wherein at least one transfer device (18) has a plurality of movers (22) that are movable independently of one another,
wherein at least one mover (22) has at least one product holder (24) that removes at least one product (10) fed by the product feed (12), wherein the product holder (24) feeds the removed product (10) to at least one intermediary transport means (30) comprising at least one conveyor belt (32),
wherein the intermediary transport means (30) feeds the product (10) to a product discharge (36, 39, 40),
wherein the intermediary transport means (30) is configured to be movable independently of the product discharge (36, 39, 40),
wherein the intermediary transport means (30) projects into a collecting region of the product discharge (36, 39, 40) for a transfer of the product (10) to the product discharge (36, 39, 40),
**characterised in that** the product (10) held by the product holder (24) is moved and/or rotated on a slide plate (14) arranged between the product feed (12) and the intermediary transport means (30),
wherein at least one cutout (16), in which the at least one conveyor belt (32) is at least partially arranged, is provided in the slide plate (14).

11. Method according to claim 10,
**characterised by** the following steps:
- Synchronising the speed of the mover (22) with the speed of the product (10) fed by the product feed (12) and/or
- Rotating the product holder (24), preferably through 90°, and/or
- Moving the product (10) by way of the intermediary transport means (30) into the collecting region of the product discharge (36), in particular toward at least one dog (38), and/or
- Moving the dog (38) to the product (10), in particular by the dog (38) being guided through between two adjacent conveyor belts (32) of the intermediary transport means (30).

## Revendications

1. Dispositif pour le transport de produits (10), en particulier pour des machines d'emballage, comprenant
au moins une alimentation-produit (12) par le biais de laquelle les produits (10) peuvent être alimentés consécutivement,
au moins un appareil de transfert (18) avec une pluralité de mouvants (22) qui peuvent être mus indépendamment l'un de l'autre,
où au moins un mouvant (22) comprend au moins rétenteur de produit (24) pour l'enlèvement d'au moins un produit (10) alimenté par l'alimentation-produit (12), comprenant au moins un emport-produit (36, 39, 40)
et au moins un transport intermédiaire (30) pour recevoir le produit enlevé par le rétenteur de produit (24),
le transport intermédiaire (30) étant disposé en amont de l'emport-produit (36, 39, 40) pour le transfert du produit (10) à l'emporte produit (36, 39, 40),
le transport intermédiaire (30) étant réalisé à être mouvable indépendamment de l'emport-produit (36, 39, 40) et
le transport intermédiaire (30) comprenant au moins une bande de transport (32), le transport intermédiaire (30) saillant dans une zone de prise de l'emport-produit (36, 39, 40) pour le transfert du produit (10) à l'emport-produit (36, 39, 40),
**caractérisé en ce qu'**entre l'alimentation-produit (12) et le transport intermédiaire (30) au moins une tôle à glissement (14) est disposée, sur laquelle le produit (10) retenu sur le rétenteur de produit (24) est mu et/ou tourné,
où au moins une échancrure (16), dans laquelle l'au moins une bande de transport (32) est au moins partiellement disposée, est prévue dans la tôle à glissement (14).

2. Dispositif selon la revendication 1,
**caractérisé en ce que** le transport intermédiaire (30) comprend plusieurs bandes de transport (32) disposées l'une à côté de l'autre.

3. Dispositif selon l'une des revendications précédentes,
**caractérisé en ce que** l'emport-produit (36, 39, 40) comprend au moins un entraîneur (38) pour recevoir le produit (10) et/ou que le transport intermédiaire (30) ne comprend aucun entraîneur.

4. Dispositif selon la revendication 3,
**caractérisé en ce que** l'au moins un entraîneur (38) est disposé de telle manière qu'il peut être mu entre deux bandes de transport (32) du transport intermédiaire (30).

5. Dispositif selon l'une des revendications précédentes,
**caractérisé en ce que** le rétenteur de produit (24) est raccordé de façon rotative avec le mouvant (22), en particulier pour tourner l'au moins un produit (10) d'une orientation en direction de transport (11) dans une orientation transversale à la direction de transport (11).

6. Dispositif selon l'une des revendications précédentes,
**caractérisé en ce qu'**au moins un rouleau de propulsion (34) est prévu, agissant conjointement avec la bande de transport (32), préférablement avec plusieurs bandes de transport (32).

7. Dispositif selon l'une des revendications précédentes,
**caractérisé en ce que** sur un mouvant (22) au moins deux rétenteurs de produit (24) sont disposés pour l'enlèvement d'au moins deux produits (10).

8. Dispositif selon l'une des revendications précédentes,
**caractérisé en ce qu'**au moins un bras (42) est prévu sur lequel au moins deux rétenteurs de produit (24) sont disposés, ledit bras (42) étant raccordé au mouvant (22) de façon rotative.

9. Dispositif selon l'une des revendications précédentes,
**caractérisé en ce que** l'emport-produit (36) comprend au moins deux emports-produit (39, 40) disposés l'un à côté de l'autre.

10. Procédé pour le transport de produits (10), en particulier pour des machines d'emballage,
où au moins une alimentation-produit (12) alimente des produits (10) consécutivement,
où au moins un appareil de transfert (18) comprend une pluralité de mouvants (22) qui peuvent être mus indépendamment l'un de l'autre,
où au moins un mouvant (22) comprend au moins un rétenteur de produit ((24) qui enlève au moins un produit (10) alimenté par l'alimentation-produit (12),
le rétenteur de produit (24) alimentant le produit enlevé (10) à au moins un transport intermédiaire (30) qui comprend au moins une bande de transport (32),
le transport intermédiaire (30) alimentant le produit (10) à un emport-produit (36, 39, 40),
le transport intermédiaire (30) étant réalisé à être mouvable indépendamment de l'emport-produit (36, 39, 40),
le transport intermédiaire (30) saillant dans une zone de prise de l'emport-produit (36, 39, 40) pour le transfert du produit (10) à l'emport-produit (36, 39, 40),
**caractérisé en ce que** le produit (10) retenu par le rétenteur de produit (24) est mu et/ou tourné sur une tôle à glissement (14) disposée entre l'alimentation-produit (12) et le transport intermédiaire (30),
où au moins une échancrure (16), dans laquelle l'au moins une bande de transport (32) est au moins partiellement disposée, est prévue dans la tôle à glissement (14).

11. Procédé selon la revendication 10, **caractérisé par** les étapes suivantes :
- Synchroniser la vélocité du mouvant (22) sur la vélocité du produit (10) alimenté par l'alimentation-produit (12) et/ou
- Tourner le rétenteur-produit (24), de préférence par 90°, et/ou
- Mouvoir le produit (10) par le biais du transport intermédiaire (30) dans la zone de prise de l'emport-produit (36), en particulier vers au moins un entraîneur (38), et/ou
- Mouvoir l'entraîneur (38) jusqu'au produit (10), en particulier en guidant l'entraîneur (38) entre deux bandes de transport voisinées (32) du transport intermédiaire (30).
